# FASCICULE DE BREVET EUROPEEN

(11) **EP 3 675 505 B1**
(45) Date de publication et mention de la délivrance du brevet: **29.09.2021**
(21) Numéro de dépôt: 19218120.4
(22) Date de dépôt: 19.12.2019
(51) Int. Cl.: H04N 21/2343, H04L 29/06

(54) **PROCEDE ET SYSTEME DE DISTRIBUTION D'UN CONTENU AUDIOVISUEL**
VERFAHREN UND SYSTEM ZUR VERBREITUNG AUDIOVISUELLER INHALTE
METHOD AND SYSTEM FOR DISTRIBUTING AUDIOVISUAL CONTENT

(30) Priorité: 27.12.2018 FR 1874204
(43) Date de publication de la demande: 01.07.2020
(73) Titulaire: Quortex, 35510 Cesson Sevigne (FR)
(72) Inventeur: TROLEZ, Thierry, 35510 CESSON SEVIGNE (FR); BAILLAVOINE, Marc, 35510 CESSON SEVIGNE (FR); VILLERET, Julien, 35510 CESSON SEVIGNE (FR); VIERON, Jérôme, 35510 CESSON SEVIGNE (FR)
(74) Mandataire: Cabinet Le Guen Maillet

(56) Documents cités:
- CN-B- 104 954 450
- US-A1- 2010 091 835

## Description

### DOMAINE TECHNIQUE

La présente invention concerne un procédé de distribution d'un contenu audiovisuel stocké ou produit par une source vers un terminal d'affichage, un système et des dispositifs mettant en œuvre ledit procédé.

### ETAT DE LA TECHNIQUE ANTERIEURE

Le monde de la distribution de la télévision est en pleine mutation. Alors que pendant longtemps les utilisateurs se contentaient d'une diffusion en direct des programmes audiovisuels sur leur poste de télévision, les modes de consommation des programmes audiovisuels ont fondamentalement changé. Ainsi, un utilisateur veut maintenant pouvoir regarder n'importe où et n'importe quand un programme audiovisuel qu'il a choisi. Ces nouveaux modes de consommation ont été rendus possibles par une apparition de nouveaux terminaux toujours plus puissants et nomades et par une forte amélioration des infrastructures réseau.

En parallèle de cette évolution, un nouveau service de diffusion audiovisuel, appelé OTT (service par contournement, « Over-The-Top service» en terminologie anglo-saxonne) est apparu. Un service OTT est un service de distribution de contenus audiovisuels sur réseau dans lequel l'opérateur dudit réseau (i.e. une compagnie de câble, de téléphone ou de satellite) n'assure qu'un rôle de transporteur desdits contenus. Dans un service OTT, l'opérateur du réseau n'a aucun contrôle sur les contenus, c'est-à-dire qu'il n'est ni responsable, ni en mesure de contrôler l'affichage desdits contenus, le respect des droits d'auteurs, et/ou la redistribution desdits contenus. Les services OTT sont opérés sur des réseaux dits non gérés (« managed » en terminologie anglo-saxonne), c'est à dire à bande passante et qualité de Service (« quality of service (QoS) » non garanties.

Afin d'adresser ces nouveaux services, divers protocoles ont été développés : Apple HLS (HTTP (« Hypertext Transfer Protocol » en terminologie anglo-saxonne) Live Streaming), Microsoft Smooth Streaming (MSS), Adobe HTTP Dynamic Streaming (HDS), MPEG Dynamic Adaptive Streaming over HTTP (MPEG-DASH). Tous ces protocoles sont basés sur un concept de transmission adaptative basée HTTP (« HTTP Adaptive Streaming (HAS) » en terminologie anglo-saxonne). Le concept de HAS repose sur le fonctionnement suivant :
- chaque contenu est encodé sous forme d'un flux binaire (« bitstream » en terminologie anglo-saxonne) selon une pluralité de profils, en utilisant différents codecs, différentes résolutions, différents débits. Cette pluralité de profils permet d'adresser des terminaux (ou des applications fonctionnant sur des terminaux) ayant des capacités différentes (codecs supportés, résolution d'écran, puissance de décodage) et d'adapter les contenus aux variations de bande passante sur le réseau.
- Chaque flux binaire est ensuite découpé en segments, appelés chunk en terminologie anglo-saxonne, de quelques secondes selon un format dépendant du protocole à supporter. Pour chaque contenu, un fichier, appelé manifeste, indiquant les caractéristiques de chaque profil et les segments correspondants, est créé. Lorsque plusieurs protocoles doivent être supportés, une version de chaque segment est créée pour chaque protocole.
- Les manifestes et les segments correspondants sont stockés sur des serveurs formant des réseaux de diffusion de contenu (« Content Delivery Network (CDN) » en terminologie anglo-saxonne), appelés simplement CDN par la suite. Les CDN fournissent des capacités de cache dans le réseau ce qui permet d'améliorer la QoS notamment en termes de temps d'accès et de latence.
- Un terminal souhaitant jouer un contenu envoie des requêtes à un CDN. Chaque requête demande un segment et précise le profil du segment demandé. C'est donc le terminal qui fixe le profil demandé.

Un contenu peut donc être stocké dans un nombre de versions important en fonction du nombre de profils et de protocoles devant être supportés. Un système de type HAS est donc très consommateur en termes de volume de données à stocker.

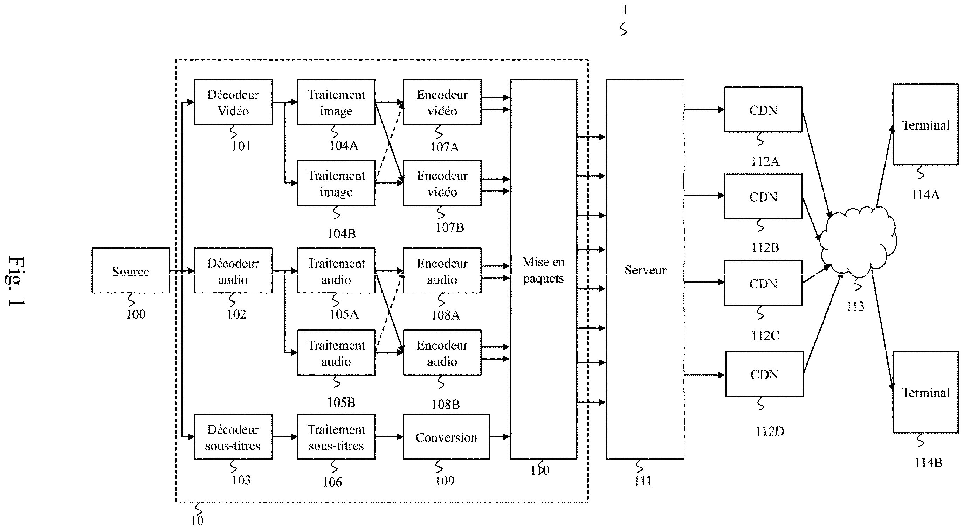

La **Fig. 1** représente schématiquement un exemple d'une chaîne de diffusion 1 de programmes audiovisuels.

La chaîne de diffusion 1 comprend une source 100, un bloc appelé tête de réseau OTT 10, un serveur, dit serveur d'origine, 111, une pluralité de CDN 112A, 112B, 112C et 112D reliés à des terminaux 114A, 114B par l'intermédiaire d'un réseau Internet 113.

La source 100 fournit un contenu d'origine à la tête de réseau OTT 10. Dans l'exemple de la Fig. 1 ce contenu est encodé sous forme d'un flux binaire comprenant un sous-flux vidéo, au moins un sous-flux audio et au moins un sous-flux de sous-titres.

La tête de réseau OTT 10 est en charge de la préparation du contenu dans des versions conformes à des besoins de terminaux qui pourraient demander ce contenu. La tête de réseau OTT 10 comprend une pluralité de modules, chaque module pouvant être un module physique (« hardware » en terminologie anglo-saxonne) ou logiciel (« software » en terminologie anglo-saxonne). Ces modules peuvent être colocalisés dans un seul système ou disséminés dans des systèmes disjoints reliés entre eux par un réseau de communication. Dans la tête de réseau OTT 10, le flux binaire est reçu par un décodeur vidéo 101 (respectivement un décodeur audio 102, un décodeur de sous-titres 103) qui génère un flux vidéo décodé (respectivement au moins un flux audio décodé, au moins un flux de sous-titres décodé).

Le flux vidéo décodé est fourni à deux modules de traitement d'images 104A et 104B qui génèrent des flux vidéo traités. Le module de traitement d'images 104A est par exemple un module de filtrage réducteur de bruit. Le module de traitement d'images 104B est par exemple un module de rehaussement de contours.

Chaque flux vidéo traité est fourni à deux encodeurs vidéo 107A et 107B. L'encodeur vidéo 107A est par exemple un encodeur conforme au standard AVC (H264/AVC (ISO/IEC 14496-10 - MPEG-4 Part 10, codage vidéo avancé (« Advanced Video Coding » en terminologie anglo-saxonne) / ITU-T H.264). L'encodeur 107B est par exemple un encodeur conforme au standard HEVC (ISO/IEC 23008-2 - MPEG-H Part 2, codage vidéo haute efficacité (High Efficiency Video Coding en terminologie anglo-saxonne) / ITU-T H.265).

Chaque flux audio décodé est fourni à deux modules de traitement audio 105A et 105B qui génèrent des flux audio traités. Le module de traitement audio 105A est par exemple un module de filtrage réducteur de bruit. Le module de traitement d'images 105B est par exemple un module de rehaussement de voix.

Chaque flux audio traité est fourni à deux encodeurs audio 108A et 108B. L'encodeur audio 108A est par exemple un encodeur conforme au standard AAC (Advanced audio coding, ISO/CEI 13818-7). L'encodeur 107B est par exemple un encodeur conforme au standard MP3 (MPEG-1/2 Audio Layer 3).

Chaque flux de sous-titres décodé est fourni à un module de traitement de sous-titres 106 qui génèrent des flux de sous-titres traités. Le module de traitement de sous-titres 106 est par exemple un module de filtrage remplaçant certains mots par d'autres en fonction d'usages linguistiques régionaux.

Chaque flux de sous-titres traité est fourni à un module de conversion de format de sous-titre.

Chaque flux vidéo issu des encodeurs vidéo 107A et 107B, chaque flux audio issu des encodeurs audio 108A et 108B et chaque flux de sous-titres issu du module de conversion 109 sont transmis à un module de mise en paquets (« packetizer » en terminologie anglo-saxonne) 110. Le module de mise en paquets 110 forme des segments conformes au(x) protocole(s) à supporter. Chaque segment est ensuite transmis à un serveur d'origine 111 qui se charge de transmettre ces segments aux CDN 112A, 112B, 112C et 112D. Chaque terminal 114A (ou 114B) désirant jouer le contenu, demande le contenu à un CDN segment par segment, en changeant de profil si nécessaire d'un segment à un autre.

Dans l'exemple de la Fig. 1, à partir d'un contenu, la tête de réseau OTT 10 a généré, en supposant que deux protocoles de type HAS doivent être supportés, une trentaine de versions différentes du contenu. Les segments correspondant à chaque version sont stockés sur chaque CDN.

Un concept concurrent du concept de HAS, dit JIT (Juste à temps, « just in time » en terminologie anglo-saxonne), permet de réduire le nombre de versions à stocker. Une application du concept JIT à la tête de réseau OTT 10 consisterait à ne pas utiliser systématiquement tous les modules dudit bloc. Par exemple, la tête de réseau OTT 10 pourrait s'arrêter aux décodages, c'est-à-dire au décodage vidéo par le décodeur vidéo 101, au décodage audio par le décodeur audio 102 et au décodage de sous-titres par le décodeur de sous-titres 103. Ensuite, sur requête, en fonction des besoins du terminal ayant émis la requête, la tête de réseau OTT 10 active certains modules.

Le concept JIT peut concerner différents étages d'une chaîne de distribution audiovisuelle. Par exemple, le concept JIT peut être appliqué à un étage de traitement (traitement d'images, traitement audio, traitement de sous-titres) et/ou à un étage d'encodage (vidéo ou audio) et/ou à un étage de mise en paquets. Ainsi, par exemple, un étage de mise en paquets peut ne former que des segments conformes à un seul protocole. Une autre application du concept JIT consiste à générer une seule version d'un contenu (un seule traitement vidéo ou audio, un seul encodage vidéo, un seul encodage audio, un seul protocole) appelée version pivot, puis de générer d'autres versions sur requête à partir de la version pivot, par exemple par transcodage.

Une limitation importante des concepts HAS et JIT est qu'ils impliquent des systèmes de diffusion de données audiovisuelles, dits systèmes de type HAS ou systèmes de type JIT, statiques. Ainsi, quel que soit le contenu et quel que soit le moment, pour générer une version d'un contenu aux caractéristiques particulières, par exemple avec des traitements audio et vidéo donnés, des encodages audio et vidéo donnés, un protocole donné, les mêmes modules de la tête de réseau OTT sont systématiquement instanciés et la même chaîne de traitement (« workflow » en terminologie anglo-saxonne) prédéfinie est systématiquement appliquée. Chaque module est ainsi connecté de manière statique avec le module qui lui donne des données et le module à qui il donne des données.

L'aspect statique est problématique. Les chaînes de traitement sont rigides. Par exemple lors d'une diffusion en directe, lorsqu'on souhaite améliorer une qualité de diffusion en ajoutant un module de traitement dans une chaîne de traitement en cours de fonctionnement ou lorsque, suite à une détection d'un usage non autorisé des données diffusées, on souhaite ajouter un module de cryptage ou de tatouage numérique (« watermarking » en terminologie anglo-saxonne) dans la chaîne de traitement. Dans ces deux cas, au mieux une intervention sur la tête de réseau OTT pour la reconfigurer et au pire un remplacement de la tête de réseau OTT est nécessaire. Par ailleurs, les ressources de traitements sont figées et non extensibles. Il n'est pas possible d'aller au-delà d'un maximum de capacité de traitement prédéfini.

Il est souhaitable de pallier ces inconvénients de l'état de la technique. Il est notamment souhaitable de proposer une solution permettant d'aboutir à des systèmes de diffusion de données audiovisuelles, pouvant facilement être enrichis aussi bien en termes d'ajout de nouveaux traitements dans une chaîne de traitement qu'en termes d'augmentation de ressources de traitement.

### EXPOSE DE L'INVENTION

Un objet de la présente invention est de proposer un procédé de distribution d'un contenu audiovisuel stocké ou produit en direct par une source vers un terminal d'affichage dans un système de distribution audiovisuel, ledit contenu étant reçu par le terminal sous forme d'une succession de fichiers consécutifs, appelés segments, chaque segment étant distribué au terminal suite à une transmission d'une requête par ledit terminal et étant obtenu par une application d'une chaîne de traitement à une portion dudit contenu. Le procédé comprend une procédure de lancement de la chaîne de traitement exécutée par le terminal ou par un dispositif intermédiaire situé entre le terminal et la chaîne de traitement, la procédure de lancement de la chaîne de traitement comprenant pour chaque segment:
obtenir une liste d'au moins un traitement représentative de la chaîne de traitement à appliquer à une portion du contenu pour obtenir ledit segment, la chaîne de traitement ayant été définie à partir d'un profil sélectionné dans un manifeste comprenant un ensemble de profils en fonction notamment, de contraintes de transmission et de traitement obtenues par ledit terminal ou le dispositif intermédiaire ; parcourir la liste et pour chaque traitement, choisir un module dans un ensemble de modules aptes à exécuter ledit traitement et ajouter un identifiant composé d'une adresse et d'un numéro de port du module choisi dans une requête ; l'identifiant apparaissant en premier dans la requête correspondant à un premier module destinataire de ladite requête ;
pour chaque traitement, ajouter dans la requête une information représentative de la portion du contenu et une information représentative de paramètres de configuration du module correspondant, les paramètres de configuration ayant été obtenus à partir, notamment, du profil;
et, transmettre ladite requête au premier module destinataire afin de lancer l'exécution de la chaîne de traitement.

Le procédé permet donc de définir une chaîne de traitement différente pour chaque segment.

Selon un mode de réalisation, la chaîne de traitement est définie pour chaque segment en outre à partir de commandes fournies par un utilisateur ou automatiquement par un équipement mesurant des performances du système de distribution audiovisuel.

Ainsi, des traitements de la chaîne de traitement peuvent être supprimés, remplacés et de nouveaux traitements ajoutés à chaque segment.

Selon un mode de réalisation, chaque module destinataire de ladite requête supprime son identifiant de ladite requête et retransmet la requête à un nouveau module destinataire de ladite chaîne correspondant à l'identifiant apparaissant en premier dans la requête ainsi modifiée si, suite à ladite suppression, au moins un identifiant subsiste dans ladite requête, chaque module traitant des données correspondant à la portion du contenu à traiter par la chaîne de traitement dès la mise à disposition de ces données par la source ou par un module précédent de la chaîne de traitement.

La chaîne de traitement n'est donc pas statique puisqu'elle est construite de proche en proche à partir de la requête.

Selon un mode de réalisation, le premier module destinataire de la requête est le premier module de la chaîne de traitement dans l'ordre d'application des traitements de la chaîne de traitement, chaque module retransmettant la requête au module le suivant dans la chaîne de traitement, ladite requête contenant les données à traiter par le module le suivant dans la chaîne de traitement.

Selon un mode de réalisation, le premier module destinataire de la requête est le dernier module de la chaîne de traitement dans l'ordre d'application des traitements de la chaîne de traitement, chaque module retransmettant la requête au module le précédant dans la chaîne de traitement, chaque réponse à une requête reçue par un module contenant les données à traiter par ledit module fourni par le module le précédant dans la chaîne de traitement.

Selon un mode de réalisation, préalablement à la transmission de la requête au module le précédant dans la chaîne de traitement, le module courant vérifie s'il possède les données qu'il doit traiter ou les données qu'il doit transmettre au module le suivant dans la chaîne de traitement ou au terminal, la possession desdites données par le module courant annulant la transmission de la requête.

Selon un mode de réalisation, lors de la réception d'une requête, chaque module vérifie qu'un identifiant le concernant apparaît en premier dans ladite requête avant tout autre traitement et lance une procédure d'erreur en cas d'absence de l'identifiant.

Selon un mode de réalisation, lors de la réception d'une requête, chaque module récupère l'information représentative des paramètres de configuration le concernant dans la requête.

Selon un mode de réalisation, lorsque la procédure de lancement de la chaîne de traitement est exécutée par un dispositif intermédiaire, le dispositif intermédiaire reçoit une première requête conforme à un protocole de diffusion de contenus audiovisuels et exécute la procédure de lancement de la chaîne de traitement à partir d'une information représentative de la portion du contenu et une information représentative du profil contenu dans la première requête.

Selon un mode de réalisation, lorsque le premier module destinataire de la requête est le dernier module de la chaîne de traitement dans l'ordre d'application des traitements de la chaîne de traitement, chaque requête est une requête conforme à la méthode GET du protocole HTTP ou HTTPS, et lorsque le premier module destinataire de la requête est le premier module de la chaîne de traitement dans l'ordre d'application des traitements de la chaîne de traitement, chaque requête est une requête conforme à la méthode POST du protocole HTTP ou HTTPS.

Selon un deuxième aspect de l'invention, l'invention concerne un dispositif dans un système de distribution d'un contenu audiovisuel stocké ou produit en direct par une source vers un terminal d'affichage, ledit contenu étant reçu par ledit terminal sous forme d'une succession de fichiers consécutifs, appelés segments, chaque segment étant distribué au terminal suite à une transmission d'une requête par ledit terminal et étant obtenu par une application d'une chaîne de traitement à une portion dudit contenu. Le dispositif comprend des moyens d'exécution d'une procédure de lancement de la chaîne de traitement comprenant pour chaque segment : des moyens d'obtention pour obtenir une liste d'au moins un traitement représentative de la chaîne de traitement à appliquer à une portion du contenu pour obtenir ledit segment, la chaîne de traitement ayant été définie à partir d'un profil sélectionné dans un manifeste comprenant un ensemble de profils en fonction notamment, de contraintes de transmission et de traitement obtenues par ledit dispositif ; des moyens de parcours pour parcourir la liste et des moyens de choix pour choisir pour chaque traitement un module dans un ensemble de modules aptes à exécuter ledit traitement et des moyens d'ajout pour ajouter un identifiant composé d'une adresse et d'un numéro de port du module choisi dans une requête ; l'identifiant apparaissant en premier dans le requête correspondant à un premier module destinataire de ladite requête; des moyens d'ajout pour ajouter dans la requête, pour chaque traitement, une information représentative de la portion du contenu et une information représentative de paramètres de configuration du module correspondant, les paramètres de configuration ayant été obtenus à partir, notamment, du profil ; et, des moyens de transmission pour transmettre ladite requête au premier module destinataire afin de lancer l'exécution de la chaîne de traitement.

Selon un troisième aspect de l'invention, l'invention concerne un système de distribution d'un contenu audiovisuel stocké ou produit en direct par une source vers un terminal d'affichage, ledit contenu étant reçu par ledit terminal sous forme d'une succession de fichiers consécutifs, appelés segments, chaque segment étant distribué au terminal suite à une transmission d'une requête par ledit terminal et étant obtenu par une application d'une chaîne de traitement comprenant au moins un traitement à une portion dudit contenu. Le système comprend un dispositif selon le deuxième aspect et le système comprend pour chaque traitement de la chaîne de traitement, un ensemble de modules aptes à exécuter ledit traitement pouvant être choisi par ledit terminal, chaque module comprenant :
des moyens de réception d'une requête transmise par ledit terminal ou un autre module de la chaîne de traitement,
des moyens de suppression de son identifiant de ladite requête ;
de moyens de retransmission de ladite requête à un autre module de ladite chaîne correspondant à l'identifiant apparaissant en premier dans la requête si, suite à ladite suppression, au moins un identifiant subsiste dans ladite requête ; et,
des moyens de traitement des données correspondant à la portion du contenu à traiter par la chaîne de traitement dès la mise à disposition de ces données par la source ou par un module précédent de la chaîne de traitement.

Selon un quatrième aspect de l'invention, l'invention concerne un produit programme d'ordinateur, comportant des instructions pour mettre en œuvre, par un dispositif, le procédé selon le premier aspect par un processeur du dispositif.

Selon un cinquième aspect de l'invention, l'invention concerne des moyens de stockage, stockant un programme d'ordinateur comportant des instructions pour mettre en œuvre, par un dispositif, le procédé selon le premier aspect lorsque ledit programme est exécuté par un processeur dudit dispositif.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] décrit un système de diffusion de données audiovisuelles classiques ;
[Fig. 2A] décrit un système de diffusion de données audiovisuelles à un premier instant pendant la diffusion ;
[Fig. 2B] décrit un système de diffusion de données audiovisuelles à un deuxième instant pendant la diffusion ;
[Fig. 2C] décrit un système de diffusion de données audiovisuelles à un troisième instant pendant la diffusion ;
[Fig. 3] illustre un exemple d'architecture matérielle d'un module système utilisé dans la cadre de l'invention ;
[Fig. 4] illustre schématiquement des étapes d'un procédé selon l'invention exécutées par un terminal ou un dispositif intermédiaire entre une chaîne de traitement et un terminal ; et,
[Fig. 5] illustre schématiquement des étapes d'un procédé selon l'invention exécutées par un module d'une chaîne de traitement.

### EXPOSE DETAILLE DE MODES DE REALISATION

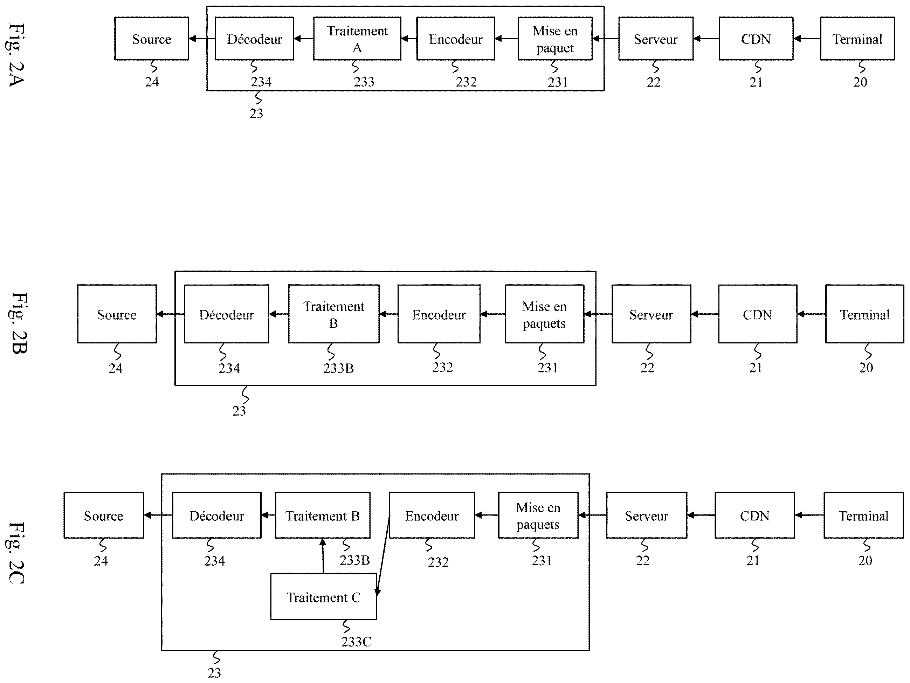

Les **Figs. 2A, 2B** et **2C** décrivent une évolution d'un système de diffusion de données audiovisuelles en cours de fonctionnement en cas d'utilisation de l'invention.

A un premier instant, correspondant à la Fig. 2A, ce système de diffusion comprend un terminal d'affichage 20, au moins un CDN 21, un serveur d'origine 22, appelé simplement serveur par la suite, une chaîne de traitement 23 et une source 24. La source 24 comprend au moins un contenu audiovisuel, appelé simplement contenu par la suite pouvant être demandé par le terminal 20 suivant un profil particulier. La chaîne de traitement 23 comprend un module de décodage 234 apte à exécuter un décodage audio et vidéo, un module de traitement d'images 233 apte à appliquer un traitement A, un module d'encodage 232 apte à effectuer un encodage audio et vidéo et un module de mise en paquets apte à générer des segments conformes à un protocole prédéterminé. Le traitement A est par exemple un filtrage réducteur de bruit. Chaque module de la chaîne de traitement 23 peut être un module logiciel (« software » en terminologie anglo-saxonne) exécuté par une unité de calcul ou matériel (« hardware » en terminologie anglo-saxonne). Les modules de traitement de la chaîne de traitement 23 peuvent être colocalisés géographiquement et reliés par exemple par un bus de communication ou dispersés et reliés entre eux par un réseau de communication.

Dans l'exemple de la Fig. 2A, la chaîne de distribution est en cours de distribution d'un contenu. Le terminal 20 a fixé un profil et la chaîne de distribution fournit des segments compatibles avec ce profil. Comme nous l'avons vu plus haut, pour chaque segment du contenu, le terminal 20 envoie une requête en direction de la chaîne de traitement contenant une information représentative du profil souhaité.

Comme nous le décrivons par la suite, la chaîne de traitement 23 est définie de manière dynamique pour chaque segment par le terminal 20 ou par un dispositif intermédiaire qui peut être le CDN 21 ou le serveur 22. Pour chaque segment, chaque module de traitement a été choisi dans un ensemble de modules de traitement candidats aptes à appliquer exactement le même traitement. Ainsi, bien que d'un segment à un autre, la chaîne de traitement 23 peut appliquer des traitements strictement identiques, chaque traitement peut être exécuté par des modules de traitement différents. Pour un traitement donné, un changement de module de traitement peut être motivé par une non disponibilité temporaire d'un module de traitement, par exemple, lorsque ce module de traitement est déjà utilisé pour générer un autre segment, par un dysfonctionnement dudit module de traitement, par une surcharge de l'unité de calcul devant implémenter ledit module de traitement, par un choix d'un opérateur qui souhaite privilégier certaines unités de calcul plutôt que d'autres, etc.

A un deuxième instant représenté en Fig. 2B, toujours en cours de diffusion du contenu, un opérateur s'est par exemple rendu compte qu'une qualité du contenu affiché sur le terminal 20 n'était pas suffisante. Dans ce contexte, un traitement B serait plus approprié qu'un traitement A. Le traitement B est par exemple un filtrage permettant de rehausser des contours. Dans ce cas, l'opérateur envoie par exemple une commande au terminal 20 afin que le terminal 20 génère une requête permettant de modifier la chaîne de traitement 23. Suite à cette commande, le module de traitement 233 est remplacé par un module de traitement 233B mettant en œuvre le traitement B.

A un troisième instant, représenté en Fig. 2C, toujours en cours de diffusion du contenu, l'opérateur s'est par exemple rendu compte que le contenu est diffusé frauduleusement sur des terminaux non autorisés. Dans ce contexte, afin de faire cesser cette fraude, un traitement C de type tatouage numérique est approprié. Dans ce cas, l'opérateur envoie par exemple une commande au terminal 20 afin que le terminal 20 génère une requête permettant de modifier la chaîne de traitement 23. Suite à ce paramétrage par l'opérateur, un module de traitement 233C mettant en œuvre le traitement C est ajouté à la chaîne de traitement 23 entre le module de traitement 233B et le module d'encodage 232.

Les exemples décrits dans les Figs. 2A, 2B et 2C montrent que l'invention permet une grande dynamicité dans la définition de la chaîne de traitement. Ainsi, une chaîne de traitement différente peut être définie à chaque segment. On note que la définition de la chaîne de traitement n'est pas seulement dynamique dans le choix du module de traitement candidat devant implémenter tel ou tel traitement, mais aussi en termes de choix des traitements à appliquer par cette chaîne de traitement.

Chaque entité composant le système de diffusion représenté en Figs. 2A, 2B et 2C (i.e. le terminal 20, le CDN 21, le serveur 22, les modules 231, 232, 233, 234, 233B, 233C et la source 24) ou chaque entité de calcul implémentant l'une de ces entités, comprend un module, dit module système, chargé de mettre en œuvre en partie l'invention.

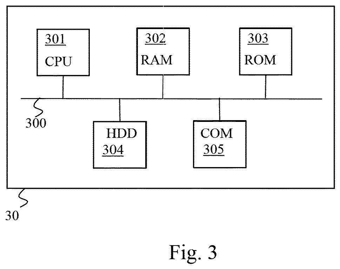

La **Fig. 3** illustre un exemple d'architecture matérielle d'un module système 30 utilisé dans la cadre de l'invention.

Le module système 30 comprend alors, reliés par un bus de communication 300: un processeur ou CPU 301; une mémoire vive RAM 302; une mémoire morte ROM 303; une unité de stockage ou un lecteur de support de stockage, tel qu'un lecteur de cartes SD 304; un ensemble d'interfaces de communication 305 permettant au module système 30 de communiquer avec d'autres entités du système de diffusion. Dans un mode de réalisation, l'interface de communication 305 implémente notamment un serveur web apte à recevoir et à générer des requêtes HTTP ou HTTPS (« HTTP Secured » en terminologie anglo-saxonne).

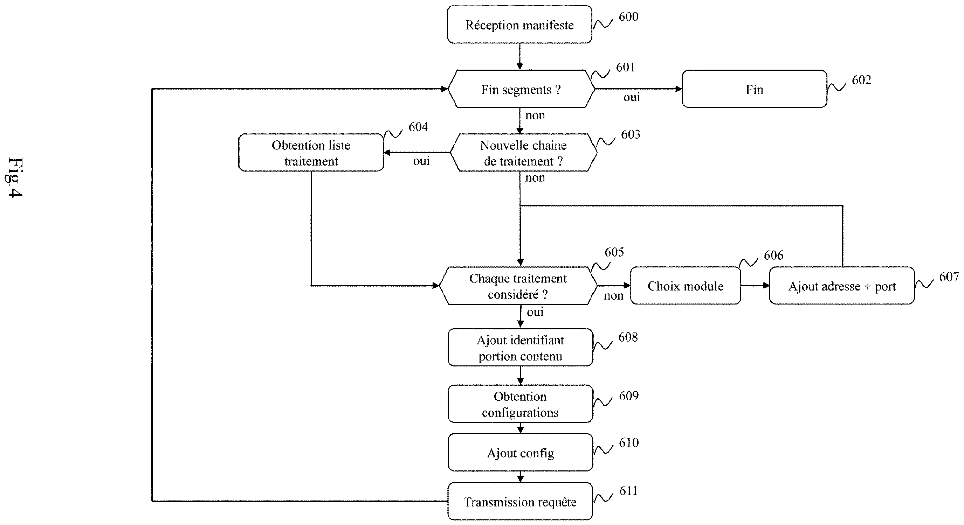

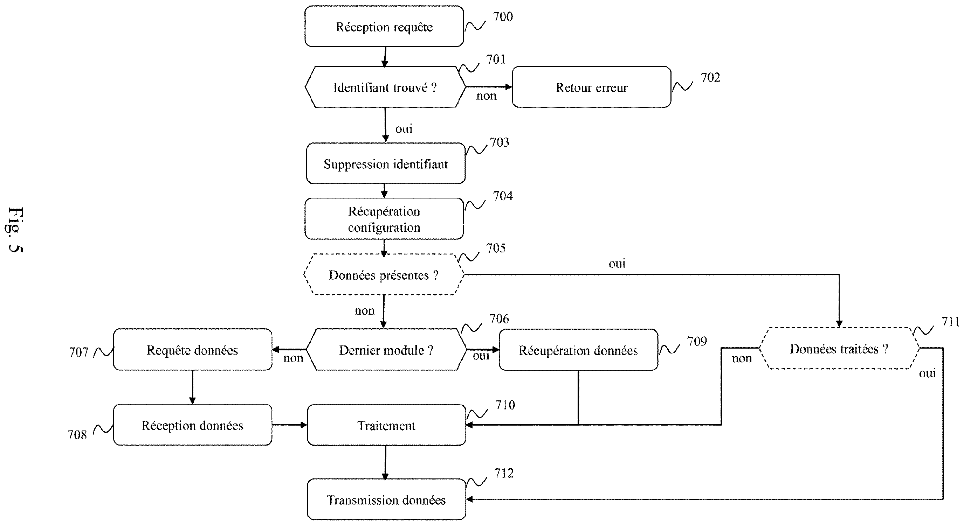

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque l'entité (i.e. le terminal 20, le CDN 21, le serveur 22, les modules de traitement 231, 232, 233, 234, 233B, 233C ou la source 24) est mise sous tension, le processeur 301 est capable de lire de la RAM 302 des instructions et de les exécuter. Ces instructions forment un programme d'ordinateur causant la mise en œuvre, par le processeur 301 d'un procédé décrit en relation avec les Figs. 4 et 5.

Tout ou partie du procédé décrit en relation avec les Figs. 4 et 5 peut être implémenté sous forme logicielle par exécution d'un ensemble d'instructions par une machine programmable, telle qu'un DSP (« Digital Signal Processor » en terminologie anglo-saxonne) ou un microcontrôleur, ou être implémenté sous forme matérielle par une machine ou un composant dédié, tel qu'un FPGA (« Field-Programmable Gâte Array » en terminologie anglo-saxonne) ou un ASIC (« Application-Specific Integrated Circuit » en terminologie anglo-saxonne).

Par la suite, nous décrivons un procédé de distribution d'un contenu stocké ou produit en direct (« live » en terminologie anglo-saxonne) par la source 24 vers le terminal 20. Cette distribution nécessite des échanges de requêtes et de données entre les différentes entités constituant le système de distribution. Dans un mode de réalisation, ces échanges utilisent des requêtes conformes au protocole HTTP ou au protocole HTTPS. D'autres protocoles adaptés pour ce type d'échanges pourraient toutefois être envisagés.

La **Fig. 4** illustre schématiquement des étapes d'un procédé selon l'invention exécutées par un terminal ou un dispositif intermédiaire entre la chaîne de traitement et le terminal.

Selon un mode de réalisation, le procédé de la Fig. 4 est exécuté par le module système 30 du terminal 20. Par la suite, pour simplifier, nous dirons simplement que le procédé de la Fig. 4 est exécuté par le module système 30.

Préalablement à la mise en œuvre du procédé de la Fig. 4, nous supposons que le module système 30 a demandé un manifeste au CDN 21 concernant un contenu. Dans une étape 600, le module système 30 reçoit une requête contenant le manifeste en provenance du CDN 21. Ce manifeste décrit chaque profil pouvant être demandé par le module système 30.

Dans une étape 601, le module système 30 détermine s'il doit continuer à jouer le contenu en cours ou pas, i.e. s'il doit demander un nouveau segment, dit segment courant. Cette information a été par exemple fournie par un utilisateur du terminal 20. Si le module système 30 ne doit pas continuer à jouer le contenu, le procédé prend fin lors d'une étape 602.

Sinon, l'étape 601 est suivie d'une étape 603. Au cours de l'étape 603, le module système 30 détermine si la chaîne de traitement 23 utilisée pour le segment précédant le segment courant doit être modifiée. En d'autres termes, est-il nécessaire d'ajouter, supprimer ou remplacer un traitement exécuté par la chaîne de traitement 23 pour obtenir le segment courant. Dans un mode de réalisation, lors de chaque changement de profil, le module système 30 considère que la chaîne de traitement 23 doit être modifiée. Lors de l'étape 603, le module système 30 sélectionne un profil, dit profil courant, parmi les profils du manifeste en fonction de contraintes de transmission et de traitement obtenues par le module système 30. Les contraintes de transmission sont par exemple une contrainte de débit mesurée par le module système 30. Les contraintes de traitement sont par exemple une capacité d'affichage (i.e. une résolution d'écran) du terminal 20, un nombre d'images pouvant être décodées par seconde, etc. Une fois déterminé, le profil courant est comparé au profil demandé pour le segment précédant le segment courant. Si les deux profils sont identiques, le module système 30 exécute une étape 605. Si les deux profils sont différents ou si le segment courant est le premier segment demandé pour le contenu, le module système 30 exécute une étape 604.

Lors de l'étape 604, le module système 30 obtient une liste d'au moins un traitement représentative de la chaîne de traitement 30 à appliquer à une portion du contenu pour obtenir le segment courant. Dans ce mode de réalisation, cette liste est déduite du profil sélectionné lors de l'étape 603. Le module système 30 possède par exemple une table de correspondance associant chaque profil pouvant être demandé pour un contenu, à une liste de traitements.

L'étape 604 est suivie de l'étape 605. Lors de l'étape 605, le module système 30 utilise soit la liste de traitements définie lors de l'étape 604, soit la liste de traitements correspondant à la chaîne de traitement appliquée au segment précédant le segment courant. Dans un mode de réalisation, la liste de traitements utilisée lors de l'étape 605 est une liste ordonnée dans laquelle les traitements à appliquer à la portion du contenu pour obtenir le segment courant apparaissent dans l'ordre inverse dans lequel ces traitements doivent être appliqués. Par exemple, si on reprend l'exemple de la Fig. 2A, la liste de traitement est la suivante :
1. mise en paquets ;
2. encodage ;
3. traitement A ;
4. décodage.

Lors de l'étape 605, le module système 30 détermine si chaque traitement de la liste de traitements a été considéré. Si non, le module système 30 parcourt la liste depuis le premier traitement à la recherche du prochain traitement non encore considéré.

Dans une étape 606, le module système 30 choisit un module de traitement (logiciel ou matériel) dans un ensemble de modules de traitement aptes à exécuter ledit traitement.

Dans une étape 607, le module système 30 ajoute un identifiant composé d'une adresse et d'un numéro de port du module de traitement choisi dans une requête. La requête est une requête HTTP ou HTTPS. Chaque identifiant est écrit à la suite de ou des identifiants éventuellement déjà présents dans la requête.

L'étape 607 est suivie de l'étape 605, au cours de laquelle le module système 30 passe au traitement suivant dans la liste.

Lorsque tous les traitements de la liste ont été considérés, le module système 30 passe à une étape 608. Lors de l'étape 608, le module système 30 ajoute dans la requête une information représentative de la portion du contenu dans la requête.

Dans une étape 609, le module système 30 obtient pour chaque traitement une information représentative de paramètres de configuration du module de traitement correspondant audit traitement, les paramètres de configuration ayant été obtenus à partir, notamment, du profil sélectionné lors de l'étape 603.

Dans une étape 610, le module système ajoute l'information représentative de paramètres de configuration de chaque module de traitement dans la requête.

En supposant que la chaîne de traitement à appliquer au segment courant est la chaîne de traitement 23 de la Fig. 2A, la requête comprend la séquence suivante :
http://Adresse1:port1/Adresse2:port2/Adresse3:port3/Adresse4:port4/lDportion?Conf
où Adresse1:port1 (respectivement Adresse2:port2, Adresse3:port3, Adresse4:port4) correspond à l'identifiant (l'adresse et le numéro de port) du module de traitement 231 (respectivement l'identifiant du module de traitement 232, du module de traitement 233 et du module de traitement 234). IDportion correspond à l'information représentative de la portion du contenu dans la requête. Conf correspond à l'information représentative de paramètres de configuration de chaque module de traitement.

Dans un mode de réalisation, l'information conf prend la forme suivante :
Conf1=NomConf1&Conf2=NomConf2&Conf3=NomConf3&Conf4=NomConf4
où ConfN correspond à un identifiant de la configuration d'un module N et NomConfN correspond à un nom du fichier textuel, par exemple au format JSON (« JavaScript Object Notation » en terminologie anglo-saxonne) ou XML (« Extensible Markup Language » en terminologie anglo-saxonne) contenant la configuration en détails qu'il faudra appliquer. Ces fichiers textuels sont par exemple connus de chaque module de traitement.

Dans un autre mode de réalisation, l'information conf prend la forme suivante :
ConflParaml=clvl&ConflParam2=clv2&ConflParam3=clv3&...&
Conf2Param1=c2v1&Conf2Param2=c2v2&Conf2Param3=c2v3&...&
Conf3Param1=c3v1&Conf3Param2=c3v2&Conf3Param3=c3v3&... &
Conf4Param1=c4v1&Conf4Param2=c4v2&Conf4Param3=c4v3
   où ConfNParamM correspond à un identifiant du Mième paramètre de la configuration du module de traitement N et cNvM correspond à une valeur du Mième paramètre de la configuration du module de traitement N. Ici la configuration est fournie en détails directement dans la requête.

Rappelons toutefois que dans le cas du HTTP/HTTPS, il y a une contrainte de taille de « 1024 » caractères par requête. Pour contourner ceci, on peut imaginer par exemple un unique paramètre Conf=ConfName où ConfName représente un pointeur vers une configuration dont les paramètres détaillés sont stockés par exemple dans une base de données partagée par les modules de traitement.

Dans une étape 611, le module système 30 transmet la requête au premier module de traitement destinataire afin de lancer l'exécution de la chaîne de traitement et ainsi provoquer la transmission du segment courant au terminal 20.

On remarque que les systèmes de diffusion décrits en relation avec les Figs. 2A, 2B et 2C comprennent un CDN 21 et un serveur 22 situés entre le terminal et la chaîne de traitement 23. Dans ce cas, la requête émise par le terminal 20 traverse le serveur 21 et le CDN 22 sans intervention de ceux-ci qui se contentent de la retransmettre.

On note que le procédé décrit en relation avec la Fig. 4 forme une procédure de lancement de la chaîne de traitement.

Jusque-là, nous avons considéré que la procédure de lancement de la chaîne de traitement était exécutée par le module système 30 du terminal 20.

Dans certains cas, le module système 30 du terminal 20 n'est pas capable de générer des requêtes selon l'invention mais uniquement des requêtes, dites requêtes classiques, conformes à des protocoles plus classiques telles que des requêtes conformes aux protocoles HLS ou MPEG-DASH. Dans ce cas, la génération de la requête selon l'invention doit être réalisée par un dispositif intermédiaire entre le terminal 20 et la chaîne de traitement. Ce dispositif intermédiaire doit alors recevoir chaque requête classique émise par le terminal 20 et former à partir de la requête classique, une requête selon l'invention. Pour ce faire, à chaque réception d'une requête classique par le dispositif intermédiaire, le dispositif intermédiaire récupère une information représentative du profil demandé dans la requête classique et une information représentative de la portion de contenu demandée dans la requête classique. A partir de ces informations, le dispositif intermédiaire applique la procédure de lancement de la chaîne de traitement. Lors de l'étape 601, le dispositif intermédiaire considère systématiquement qu'un nouveau segment doit être demandé. Lors de l'étape 603, le profil courant est le profil trouvé dans la requête classique. Le dispositif intermédiaire assure donc un rôle de traducteur de requête.

Dans un mode de réalisation, le dispositif intermédiaire est un CDN, par exemple le CDN 21.

Dans un mode de réalisation, le dispositif intermédiaire est le serveur 22.

Dans un mode de réalisation, le dispositif intermédiaire est un module serveur web situé entre le serveur 22 et la chaîne de traitement 23.

Dans un mode de réalisation, la chaîne de traitement est définie en fonction du profil sélectionné lors de l'étape 603 mais aussi, en fonction de commandes reçues par le terminal 20 ou le dispositif intermédiaire. Ces commandes sont par exemple des commandes fournies par un opérateur du système de distribution. Ces commandes indiquent que la chaîne de traitement doit comporter un ou plusieurs modules donnés (par exemple, un module de tatouage numérique). Ces commandes peuvent aussi être fournies automatiquement par un équipement mesurant des performances du système de diffusion. Par exemple, l'équipement peut mesurer une qualité d'une ou d'une pluralité de diffusions, une latence d'une ou d'une pluralité de diffusions, une charge des dispositifs ou des unités de calcul mettant en œuvre chaque module de traitement d'une ou d'une pluralité de chaînes de traitement. Par exemple, si des unités de calcul mettant en œuvre des modules de traitement d'une pluralité de chaînes de traitement sont surchargées, l'équipement peut décider de modifier les chaînes de traitement pour passer à des modules de traitement exécutant des traitements moins coûteux en termes de coût calculatoire.

Dans un mode de réalisation, le module système 30 du terminal 20 ou du dispositif intermédiaire ne possède pas de table de correspondance mais reçoit de la part du CDN 21 un manifeste comprenant pour chaque profil possible, une liste ordonnée de traitement à appliquer pour obtenir un segment conforme à ce profil.

La **Fig. 5** illustre schématiquement des étapes d'un procédé selon l'invention exécutées par chaque module d'une chaîne de traitement.

Comme nous l'avons plus haut, la requête obtenue par la procédure de lancement de la chaîne de traitement a été transmise au module de traitement de la chaîne de traitement dont l'identifiant apparaît en premier dans la requête. Dans le mode de réalisation décrit en relation avec la Fig. 4, le module de traitement apparaissant en premier dans la requête est le module de traitement 231 correspondant au dernier traitement à appliquer à la portion de contenu pour obtenir le segment courant.

Dans une étape 700, le module système 30 du module de traitement 231 reçoit la requête.

Dans une étape 701, le module système 30 du module de traitement 231 vérifie que l'identifiant du module de traitement 231 est bien présent dans ladite requête. Si l'identifiant n'est pas présent, dans une étape 702, le module système 30 du module de traitement 231 lance une procédure d'erreur. La procédure d'erreur consiste par exemple à envoyer un message d'erreur au dispositif ayant exécuté la procédure de lancement de la chaîne de traitement (i.e. le terminal 20, le CDN 21 ou le serveur 22).

Si l'identifiant du module de traitement 231 est présent dans la requête, le module système 30 du module de traitement 231 supprime son identifiant de la requête dans une étape 703.

Dans une étape 704, le module système 30 du module de traitement 231 extrait les informations représentatives de ses paramètres de configuration de la requête.

Dans une étape 706, le module système 30 du module de traitement 231 vérifie s'il est le premier module de la chaîne de traitement. Pour ce faire, par exemple, le module système 30 du module de traitement 231 vérifie si suite à la suppression de son identifiant, au moins un identifiant subsiste dans la requête.

En l'occurrence, suite à la suppression de l'identifiant du module de traitement 231, les identifiants des modules de traitement 232, 233 et 234 subsistent dans la requête. Dans ce cas, lors d'une étape 707, le module système 30 du module de traitement 231 transmet la requête ainsi modifiée au module de traitement dont l'identifiant apparaît maintenant en premier dans la requête, c'est-à-dire le module de traitement 232.

Dans une étape 708, suite à la transmission de la requête lors de l'étape 707, le module système 30 du module de traitement 231 reçoit des données issues du ou des traitements exécutés par le ou les modules de traitement précédant le module de traitement 231.

Dans une étape 710, le module système 30 lance le traitement par le module de traitement 231 des données reçues lors de l'étape 708.

Dans une étape 712, le module 30 du module de traitement 231 envoie les données traitées en direction du terminal 20. Les données traitées par le module de traitement 231 correspondent au segment courant.

La requête générée lors de la procédure de lancement de la chaîne de traitement est ainsi transmise de proche en proche à chaque module de la chaîne de traitement 23. Tous les modules de la chaîne de traitement exécutent les mêmes étapes du procédé de la Fig. 5 excepté le premier module de traitement de la chaîne de traitement dans l'ordre d'application des traitements (i.e. le module de traitement 234)

En effet, lorsque le module système 30 du module de traitement 234 exécute le procédé de la Fig. 5, l'étape 706 est suivie de l'étape 709. Lors de l'étape 709, le module système 30 du module de traitement 234 transmet à la source une requête pour obtenir la portion du contenu à traiter par la chaîne de traitement 23 et reçoit ladite portion. L'étape 709 est suivie de l'étape 710.

En reprenant l'exemple de la chaîne de traitement 23 de la Fig. 2A, le module de traitement 231 reçoit la requête issue de la procédure de lancement de la chaîne de traitement, cette requête comprenant la séquence suivante:
http://Adresse1:port1/Adresse2:port2/Adresse3:port3/Adresse4:port4/1Dportion?Conf

Le module de traitement 232 reçoit la requête modifiée par le module 231, cette requête comprenant la séquence suivante :
http://Adresse2:port2/Adresse3 :port3/Adresse4:port4/IDportion?Conf

Le module de traitement 233 reçoit la requête modifiée par les modules 231 et 232, cette requête comprenant la séquence suivante :
http://Adresse3:port3/Adresse4:port4/IDportion?Conf

Enfin, le module de traitement 234 reçoit la requête modifiée par les modules 231, 232 et 233, cette requête comprenant la séquence suivante
http://Adresse4:port4/IDportion?Conf

Dans mode de réalisation, le procédé décrit en relation avec la Fig. 5 comprend une étape 705, au cours de laquelle le module système 30 du module de traitement 231 (ou du module de traitement 232, 233 ou 234) vérifie si le module de traitement 231 ne possède pas déjà les données qui lui sont demandées. Ces données ont pu par exemple avoir été demandées au module de traitement 231 par une autre requête. Si le module de traitement 231 ne possède pas ces données, le procédé se poursuit avec l'étape 706.

Si le module de traitement 231 possède ces données, le module système 30 du module de traitement 231 détermine lors d'une étape 711 si ces données ont déjà été traitées. Si ces données sont traitées, le module système 30 du module de traitement 231 exécute l'étape 712. Sinon, le module système 30 exécute l'étape 710.

Dans un mode de réalisation, lors de l'étape 704, une fois qu'un module de traitement a récupéré ses paramètres de configuration, il supprime ces paramètres de configuration de la requête.

Notons que toutes les requêtes échangées dans l'exemple d'exécution du procédé décrit en relation avec la Fig. 5 sont conformes à la méthode GET du protocole HTTP/HTTPS.

Jusque-là, nous avons considéré que le module dont l'identifiant apparaît en premier dans la requête issue de l'exécution de la procédure de lancement de la chaîne de traitement était le dernier module de traitement de la chaîne de traitement dans l'ordre d'exécution des traitements sur la portion de contenu utilisée pour générer le segment courant. Dans ce mode de réalisation, la requête générée par la procédure de lancement de la chaîne de traitement parcourt les modules de traitement de la chaîne de traitement dans l'ordre inverse des traitements puis les données à traiter pour obtenir le segment parcourent la chaîne de traitement dans l'ordre des traitements.

Dans un mode de réalisation, la liste de traitement utilisée lors de l'étape 605 est une liste ordonnée dans laquelle les traitements à appliquer à la portion du contenu pour obtenir le segment courant apparaissent dans l'ordre dans lequel ces traitements doivent être appliqués. Dans ce mode de réalisation, le module de traitement dont l'identifiant apparaît en premier dans la requête issue de l'exécution de la procédure de lancement de la chaîne de traitement est le premier module de traitement de la chaîne de traitement dans l'ordre d'exécution des traitements. Si on reprend la chaîne de traitement 23 de la Fig. 2A, la requête issue de l'exécution de la procédure de lancement de la chaîne de traitement comprend la séquence suivante :
http://Adresse4:port4/Adresse3:port3/Adresse2:port2/Adresse1:port1/IDportion?Conf

Le premier module de traitement à recevoir la requête est donc le module de traitement 234. Suite à la réception de la requête, le module système 30 du module de traitement 234 exécute le procédé de la Fig. 5. Lors de l'étape 706, le module système 30 du module de traitement 234 vérifie s'il est le premier module de traitement de la chaîne de traitement dans l'ordre d'application des traitements. On suppose ici que, par définition, un module de décodage sait qu'il est le premier module de traitement d'une chaîne de traitement. Dans ce cas, suite à l'étape 706, le module système 30 du module de traitement 234 applique l'étape 709.

Lors de l'étape 712, le module système 30 du module de traitement 234 transmet la requête modifiée lors de l'étape 703 (et lors de l'étape 704) au module suivant de la chaîne de traitement dans l'ordre des traitements par la chaîne de traitement (i.e. le module 233). Toutefois, dans ce mode de réalisation, la requête comprend les données à traiter par le module de traitement suivant.

Ainsi, lors de la réception de cette requête par le module système 30 du module de traitement 233 (respectivement du module de traitement 232 et 231), lors du test de l'étape 705, ledit module système 30 détermine systématiquement que le module de traitement 233 (respectivement 232 et 231) possède déjà les données. Si ces données n'ont pas été préalablement traitées, le module système 30 du module de traitement 233 (respectivement du module 232 et 231) lance le traitement des données par le module de traitement 233 (respectivement par le module de traitement 232 et 231) lors de l'étape 710. Les données pouvant avoir été déjà traitées par le module de traitement 233 (respectivement par le module de traitement 232 et 231) suite à une réception d'une précédente requête, l'étape 711 peut aussi être suivie de l'étape 712.

Le dernier module de traitement de la chaîne de traitement dans l'ordre d'application des traitements, c'est-à-dire le module de traitement 231, transmet alors le segment en direction du terminal 20.

En reprenant l'exemple de la chaîne de traitement 23 de la Fig. 2A, le module de traitement 234 reçoit donc la requête issue de la procédure de lancement de la chaîne de traitement, cette requête comprenant la séquence suivante:
http://Adresse4:port4/Adresse3:port3/Adresse2:port2/Adresse1:port1/IDportion?Conf

Le module de traitement 233 reçoit la requête modifiée par le module 234, cette requête comprenant la séquence suivante :
http://Adresse3:port3/Adresse2:port2/Adresse1:port1/IDportion?Conf

Le module de traitement 232 reçoit la requête modifiée par les modules 234 et 233, cette requête comprenant la séquence suivante :
http://Adresse2:port2/Adresse1:port1/IDportion?Conf

Enfin, le module de traitement 231 reçoit la requête modifiée par les modules 234, 233 et 232, cette requête comprenant la séquence suivante
http://Adresse1:port1/IDponion?Conf

Dans ce mode de réalisation, les requêtes échangées sont conformes à la méthode POST du protocole HTTP/HTTPS.

Dans un mode de réalisation, la procédure de lancement de la chaîne de traitement est exécutée par le CDN 21 indépendamment de toute requête d'un terminal. Dans ce mode de réalisation, le CDN 21 anticipe des demandes à venir émanant de clients. Les segments ainsi obtenus sont conservés au moins temporairement par le CDN 21.

Jusque-là nous avons considéré que le terminal 20 ou le dispositif intermédiaire demandait le contenu segment par segment. L'invention pourrait toutefois fonctionner de manière identique si le terminal 20 ou le dispositif intermédiaire demandait le contenu par groupe de segments.

## Revendications

1. Procédé de distribution d'un contenu audiovisuel stocké ou produit en direct par une source vers un terminal d'affichage dans un système de distribution audiovisuel, ledit contenu étant reçu par le terminal sous forme d'une succession de fichiers consécutifs, appelés segments, chaque segment étant distribué au terminal suite à une transmission d'une requête par ledit terminal et étant obtenu par une application d'une chaîne de traitement à une portion dudit contenu, **caractérisé en ce que** le procédé comprend une procédure de lancement de la chaîne de traitement exécutée par le terminal ou par un dispositif intermédiaire situé entre le terminal et la chaîne de traitement, la procédure de lancement de la chaîne de traitement comprenant pour chaque segment :
- obtenir (604) une liste d'au moins un traitement représentative de la chaîne de traitement à appliquer à une portion du contenu pour obtenir ledit segment, la chaîne de traitement ayant été définie à partir d'un profil sélectionné dans un manifeste comprenant un ensemble de profils en fonction notamment, de contraintes de transmission et de traitement obtenues par ledit terminal ou le dispositif intermédiaire ;
- parcourir (605) la liste et pour chaque traitement, choisir (606) un module dans un ensemble de modules aptes à exécuter ledit traitement et ajouter (607) un identifiant composé d'une adresse et d'un numéro de port du module choisi dans une requête ; l'identifiant apparaissant en premier dans la requête correspondant à un premier module destinataire de ladite requête ;
- pour chaque traitement, ajouter (608) dans la requête une information représentative de la portion du contenu et (609) une information représentative de paramètres de configuration du module correspondant, les paramètres de configuration ayant été obtenus à partir, notamment, du profil; et,
- transmettre (611) ladite requête au premier module destinataire afin de lancer l'exécution de la chaîne de traitement.

2. Procédé selon la revendication 1 **caractérisé en ce que**, la chaîne de traitement est définie pour chaque segment en outre à partir de commandes fournies par un utilisateur ou automatiquement par un équipement mesurant des performances du système de distribution audiovisuel.

3. Procédé selon la revendication 1 ou 2, **caractérisé en ce que** chaque module destinataire de ladite requête supprime (703) son identifiant de ladite requête et retransmet la requête à un nouveau module destinataire de ladite chaîne correspondant à l'identifiant apparaissant en premier dans la requête ainsi modifiée si, suite à ladite suppression, au moins un identifiant subsiste dans ladite requête, chaque module traitant des données correspondant à la portion du contenu à traiter par la chaîne de traitement dès la mise à disposition de ces données par la source ou par un module précédent de la chaîne de traitement.

4. Procédé selon la revendication 1, 2 ou 3, **caractérisé en ce que** le premier module destinataire de la requête est le premier module de la chaîne de traitement dans l'ordre d'application des traitements de la chaîne de traitement, chaque module retransmettant la requête au module le suivant dans la chaîne de traitement, ladite requête contenant les données à traiter par le module le suivant dans la chaîne de traitement.

5. Procédé selon la revendication 1, 2, 3 ou 4, **caractérisé en ce que** le premier module destinataire de la requête est le dernier module de la chaîne de traitement dans l'ordre d'application des traitements de la chaîne de traitement, chaque module retransmettant la requête au module le précédant dans la chaîne de traitement, chaque réponse à une requête reçue par un module contenant les données à traiter par ledit module fourni par le module le précédant dans la chaîne de traitement.

6. Procédé selon la revendication 5, **caractérisé en ce que**, préalablement à la transmission de la requête au module le précédant dans la chaîne de traitement, le module courant vérifie s'il possède les données qu'il doit traiter ou les données qu'il doit transmettre au module le suivant dans la chaîne de traitement ou au terminal, la possession desdites données par le module courant annulant la transmission de la requête.

7. Procédé selon l'une quelconque des revendications précédentes **caractérisé en ce que**, lors de la réception d'une requête, chaque module vérifie qu'un identifiant le concernant apparaît en premier dans ladite requête avant tout autre traitement et lance une procédure d'erreur en cas d'absence de l'identifiant.

8. Procédé selon l'une quelconque des revendications 3 à 8, **caractérisé en ce que**, lors de la réception d'une requête, chaque module récupère l'information représentative des paramètres de configuration le concernant dans la requête.

9. Procédé selon l'une quelconque des revendications précédente **caractérisé en ce que**, lorsque la procédure de lancement de la chaîne de traitement est exécutée par un dispositif intermédiaire, le dispositif intermédiaire reçoit une première requête conforme à un protocole de diffusion de contenus audiovisuels et exécute la procédure de lancement de la chaîne de traitement à partir d'une information représentative de la portion du contenu et une information représentative du profil contenu dans la première requête.

10. Procédé selon l'une quelconque des revendications précédentes, **caractérisé en ce que**, lorsque le premier module destinataire de la requête est le dernier module de la chaîne de traitement dans l'ordre d'application des traitements de la chaîne de traitement, chaque requête est une requête conforme à la méthode GET du protocole HTTP ou HTTPS, et lorsque le premier module destinataire de la requête est le premier module de la chaîne de traitement dans l'ordre d'application des traitements de la chaîne de traitement, chaque requête est une requête conforme à la méthode POST du protocole HTTP ou HTTPS.

11. Dispositif dans un système de distribution d'un contenu audiovisuel stocké ou produit en direct par une source vers un terminal d'affichage, ledit contenu étant reçu par ledit terminal sous forme d'une succession de fichiers consécutifs, appelés segments, chaque segment étant distribué au terminal suite à une transmission d'une requête par ledit terminal et étant obtenu par une application d'une chaîne de traitement à une portion dudit contenu, **caractérisé en ce que** le dispositif comprend des moyens d'exécution d'une procédure de lancement de la chaîne de traitement comprenant pour chaque segment :
- obtenir une liste d'au moins un traitement représentative de la chaîne de traitement à appliquer à une portion du contenu pour obtenir ledit segment, la chaîne de traitement ayant été définie à partir d'un profil sélectionné dans un manifeste comprenant un ensemble de profils en fonction notamment, de contraintes de transmission et de traitement obtenues par ledit dispositif ;
- parcourir la liste et choisir pour chaque traitement un module dans un ensemble de modules aptes à exécuter ledit traitement et ajouter un identifiant composé d'une adresse et d'un numéro de port du module choisi dans une requête; l'identifiant apparaissant en premier dans la requête correspondant à un premier module destinataire de ladite requête;
- ajouter dans la requête, pour chaque traitement, une information représentative de la portion du contenu et une information représentative de paramètres de configuration du module correspondant, les paramètres de configuration ayant été obtenus à partir, notamment, du profil ; et,
- transmettre ladite requête au premier module destinataire afin de lancer l'exécution de la chaîne de traitement.

12. Système de distribution d'un contenu audiovisuel stocké ou produit en direct par une source vers un terminal d'affichage, ledit contenu étant reçu par ledit terminal sous forme d'une succession de fichiers consécutifs, appelés segments, chaque segment étant distribué au terminal suite à une transmission d'une requête par ledit terminal et étant obtenu par une application d'une chaîne de traitement comprenant au moins un traitement à une portion dudit contenu, **caractérisé en ce que** le système comprend un dispositif selon la revendication 11 et **en ce que** le système comprend pour chaque traitement de la chaîne de traitement, un ensemble de modules aptes à exécuter ledit traitement pouvant être choisi par ladite unité, chaque module comprenant : des moyens de réception d'une requête transmise par ledit terminal ou un autre module de la chaîne de traitement ; des moyens de suppression de son identifiant de ladite requête ; des moyens de retransmission de ladite requête à un autre module de ladite chaîne correspondant à l'identifiant apparaissant en premier dans la requête si, suite à ladite suppression, au moins un identifiant subsiste dans ladite requête ; et, des moyens de traitement des données correspondant à la portion du contenu à traiter par la chaîne de traitement dès la mise à disposition de ces données par la source ou par un module précédent de la chaîne de traitement.

13. Produit programme d'ordinateur, **caractérisé en ce qu'**il comporte des instructions pour mettre en œuvre, par un dispositif, le procédé selon la revendication 1 par un processeur du dispositif.

14. Moyens de stockage, **caractérisés en ce qu'**ils stockent un programme d'ordinateur comportant des instructions pour mettre en œuvre, par un dispositif, le procédé selon la revendication 1 lorsque ledit programme est exécuté par un processeur dudit dispositif.

## Patentansprüche

1. Verfahren zur Verteilung eines gespeicherten oder direkt von einer Quelle erzeugten audiovisuellen Inhalts zu einem Anzeigeterminal in einem audiovisuellen Verteilungssystem, wobei der Inhalt vom Terminal in Form einer Folge von aufeinanderfolgenden Dateien, Segmente genannt, empfangen wird, wobei jedes Segment nach einer Übertragung einer Anforderung durch das Terminal an das Terminal verteilt und durch eine Anwendung einer Verarbeitungskette an einen Teil des Inhalts erhalten wird, **dadurch gekennzeichnet, dass** das Verfahren eine Startprozedur der Verarbeitungskette enthält, die vom Terminal oder von einer Zwischenvorrichtung ausgeführt wird, die sich zwischen dem Terminal und der Verarbeitungskette befindet, wobei die Startprozedur der Verarbeitungskette für jedes Segment enthält:
- Erhalten (604) einer für die zum Erhalten des Segments an einen Teil des Inhalts anzuwendende Verarbeitungskette repräsentativen Liste mindestens einer Verarbeitung, wobei die Verarbeitungskette ausgehend von einem Profil definiert wurde, das in einem Manifest ausgewählt wird, das eine Gruppe von Profilen enthält, abhängig insbesondere von Übertragungs- und Verarbeitungszwängen, die vom Terminal oder von der Zwischenvorrichtung erhalten wurden;
- Durchlaufen (605) der Liste, und für jede Verarbeitung Wahl (606) eines Moduls in einer Gruppe von Modulen, die die Verarbeitung ausführen können, und Hinzufügen (607) einer Kennung bestehend aus einer Adresse und einer Port-Nummer des gewählten Moduls in eine Anforderung; wobei die Kennung, die zuerst in der Anforderung erscheint, einem ersten Empfängermodul der Anforderung entspricht;
- für jede Verarbeitung, Hinzufügen (608) in die Anforderung einer für den Teil des Inhalts repräsentativen Information und (609) einer für Konfigurationsparameter des entsprechenden Moduls repräsentativen Information, wobei die Konfigurationsparameter insbesondere ausgehend vom Profil erhalten wurden; und
- Übertragen (611) der Anforderung an das erste Empfängermodul, um die Ausführung der Verarbeitungskette zu starten.

2. Verfahren nach Anspruch 1, **dadurch gekennzeichnet, dass** die Verarbeitungskette für jedes Segment außerdem ausgehend von Befehlen definiert wird, die von einem Benutzer oder automatisch von einer Ausrüstung geliefert werden, die Leistungen des audiovisuellen Verteilungssystems misst.

3. Verfahren nach Anspruch 1 oder 2, **dadurch gekennzeichnet, dass** jedes Empfängermodul der Anforderung seine Kennung aus der Anforderung löscht (703) und die Anforderung an ein neues Empfängermodul der Kette weiterleitet, das der Kennung entspricht, die als erste in der so veränderten Anforderung erscheint, wenn nach der Löschung mindestens eine Kennung in der Anforderung verbleibt, wobei jedes Modul Daten verarbeitet, die dem von der Verarbeitungskette zu verarbeitenden Teil des Inhalts entsprechen, ab der Zurverfügungstellung dieser Daten durch die Quelle oder durch ein vorhergehendes Modul der Verarbeitungskette.

4. Verfahren nach Anspruch 1, 2 oder 3, **dadurch gekennzeichnet, dass** das erste Empfängermodul der Anforderung das erste Modul der Verarbeitungskette in der Anwendungsreihenfolge der Verarbeitungen der Verarbeitungskette ist, wobei jedes Modul die Anforderung an das ihm in der Verarbeitungskette folgende Modul weiterleitet, wobei die Anforderung die von dem ihm in der Verarbeitungskette folgenden Modul zu verarbeitenden Daten enthält.

5. Verfahren nach Anspruch 1, 2, 3 oder 4, **dadurch gekennzeichnet, dass** das erste Empfängermodul der Anforderung das letzte Modul der Verarbeitungskette in der Anwendungsreihenfolge der Verarbeitungen der Verarbeitungskette ist, wobei jedes Modul die Anforderung an das in der Verarbeitungskette vor ihm liegende Modul weiterleitet, wobei jede Antwort auf eine von einem Modul empfangene Anforderung die von dem Modul zu verarbeitenden Daten enthält, das von dem in der Verarbeitungskette vor ihm liegenden Modul geliefert wird.

6. Verfahren nach Anspruch 5, **dadurch gekennzeichnet, dass** vor der Übertragung der Anforderung an das in der Verarbeitungskette vor ihm liegende Modul das aktuelle Modul überprüft, ob es die Daten, die es verarbeiten soll, oder die Daten besitzt, die es an das ihm in der Verarbeitungskette folgende Modul oder an das Terminal übertragen soll, wobei der Besitz der Daten durch das aktuelle Modul die Übertragung der Anforderung abbricht.

7. Verfahren nach einem der vorhergehenden Ansprüche, **dadurch gekennzeichnet, dass** bei Empfang einer Anforderung jedes Modul vor jeder anderen Verarbeitung überprüft, ob eine es betreffende Kennung als erstes in der Anforderung erscheint, und im Fall des Nichtvorhandenseins der Kennung eine Fehlerprozedur startet.

8. Verfahren nach einem der Ansprüche 3 bis 8, **dadurch gekennzeichnet, dass** bei Empfang einer Anforderung jedes Modul die für die es betreffenden Konfigurationsparameter in der Anforderung repräsentative Information abruft.

9. Verfahren nach einem der vorhergehenden Ansprüche, **dadurch gekennzeichnet, dass**, wenn die Startprozedur der Verarbeitungskette von einer Zwischenvorrichtung ausgeführt wird, die Zwischenvorrichtung eine erste Anforderung entsprechend einem Verbreitungsprotokoll audiovisueller Inhalte empfängt und die Startprozedur der Verarbeitungskette ausgehend von einer für den Teil des Inhalts repräsentativen Information und einer für das in der ersten Anforderung enthaltene Profil repräsentativen Information ausführt.

10. Verfahren nach einem der vorhergehenden Ansprüche, **dadurch gekennzeichnet, dass**, wenn das erste Empfängermodul der Anforderung das letzte Modul der Verarbeitungskette in der Anwendungsreihenfolge der Verarbeitungen der Verarbeitungskette ist, jede Anforderung eine Anforderung gemäß der GET-Methode des HTTP- oder HTTPS-Protokolls ist, und wenn das erste Empfängermodul der Anforderung das erste Modul der Verarbeitungskette in der Anwendungsreihenfolge der Verarbeitungen der Verarbeitungskette ist, jede Anforderung eine Anforderung gemäß der POST-Methode des HTTP- oder HTTPS-Protokolls ist.

11. Vorrichtung in einem Verteilungssystem eines gespeicherten oder direkt von einer Quelle erzeugten audiovisuellen Inhalts zu einem Anzeigeterminal, wobei der Inhalt in Form einer Folge von aufeinanderfolgenden Dateien, Segmente genannt, vom Terminal empfangen wird, wobei jedes Segment nach einer Übertragung einer Anforderung durch das Terminal an das Terminal verteilt und durch eine Anwendung einer Verarbeitungskette an einen Teil des Inhalts erhalten wird, **dadurch gekennzeichnet, dass** die Vorrichtung Einrichtungen zur Ausführung einer Startprozedur der Verarbeitungskette enthält, die für jedes Segment enthält:
- Erhalten einer für die zum Erhalten des Segments an einen Teil des Inhalts anzuwendende Verarbeitungskette repräsentativen Liste mindestens einer Verarbeitung, wobei die Verarbeitungskette ausgehend von einem Profil definiert wurde, das in einem Manifest ausgewählt wird, das eine Gruppe von Profilen enthält, abhängig insbesondere von Übertragungs- und Verarbeitungszwängen, die von der Vorrichtung erhalten wurden;
- Durchlaufen der Liste, und für jede Verarbeitung Wahl eines Moduls in einer Gruppe von Modulen, die die Verarbeitung ausführen können, und Hinzufügen einer Kennung bestehend aus einer Adresse und einer Port-Nummer des gewählten Moduls in eine Anforderung; wobei die Kennung, die zuerst in der Anforderung erscheint, einem ersten Empfängermodul der Anforderung entspricht;
- für jede Verarbeitung, Hinzufügen in die Anforderung einer für den Teil des Inhalts repräsentativen Information und einer für Konfigurationsparameter des entsprechenden Moduls repräsentativen Information, wobei die Konfigurationsparameter insbesondere ausgehend vom Profil erhalten wurden; und
- Übertragen der Anforderung an das erste Empfängermodul, um die Ausführung der Verarbeitungskette zu starten.

12. System zur Verteilung eines gespeicherten oder direkt von einer Quelle erzeugten audiovisuellen Inhalts zu einem Anzeigeterminal, wobei der Inhalt in Form einer Folge von aufeinanderfolgenden Dateien, Segmente genannt, vom Terminal empfangen wird, wobei jedes Segment nach einer Übertragung einer Anforderung durch das Terminal an das Terminal verteilt und durch eine Anwendung einer mindestens eine Verarbeitung enthaltenden Verarbeitungskette an einen Teil des Inhalts erhalten wird, **dadurch gekennzeichnet, dass** das System eine Vorrichtung nach Anspruch 11 enthält, und dass das System für jede Verarbeitung der Verarbeitungskette eine Gruppe von Modulen enthält, die die Verarbeitung ausführen können, die von der Einheit ausgewählt werden kann, wobei jedes Modul enthält: Empfangseinrichtungen einer vom Terminal oder einem anderen Modul der Verarbeitungskette übertragenen Anforderung; Einrichtungen zur Löschung seiner Kennung aus der Anforderung; Einrichtungen zur Weiterleitung der Anforderung an ein anderes Modul der Kette entsprechend der Kennung, die als erstes in der Anforderung erscheint, wenn nach der Löschung mindestens eine Kennung in der Anforderung verbleibt; und Verarbeitungseinrichtungen der Daten entsprechend dem von der Verarbeitungskette zu verarbeitenden Teil des Inhalts ab der Zurverfügungstellung dieser Daten durch die Quelle oder durch ein vorhergehendes Modul der Verarbeitungskette.

13. Computerprogrammprodukt, **dadurch gekennzeichnet, dass** es Anweisungen aufweist, um von einer Vorrichtung das Verfahren nach Anspruch 1 durch einen Prozessor der Vorrichtung durchzuführen.

14. Speichereinrichtungen, **dadurch gekennzeichnet, dass** sie ein Computerprogramm speichern, das Anweisungen aufweist, um von einer Vorrichtung das Verfahren nach Anspruch 1 durchzuführen, wenn das Programm von einem Prozessor der Vorrichtung ausgeführt wird.

## Claims

1. Method for distributing an audiovisual content stored or produced live by a source to a display terminal in an audiovisual distribution system, said content being received by the terminal in the form of a succession of consecutive files, called chunks, each chunk being distributed to the terminal following a transmission of a request by said terminal and being obtained via an application of a workflow to a segment of said content, **characterized in that** the method comprises a procedure for launching the workflow, which is executed by the terminal or by an intermediate device located between the terminal and the workflow, the procedure for launching the workflow comprising, for each chunk:
- obtaining (604) a list of at least one processing operation representative of the workflow to be applied to a segment of the content to obtain said chunk, the workflow having been defined on the basis of a profile selected from a manifest comprising a set of profiles, in particular depending on transmission and processing constraints obtained by said terminal or the intermediate device;
- scanning (605) the list and, for each processing operation, choosing (606) a module from a set of modules able to execute said processing operation and adding (607) an identifier composed of an address and of a port number of the chosen module to a request, the identifier appearing first in the request corresponding to a first module to which said request is addressed;
- for each processing operation, adding (608), to the request, information representative of the segment of content and (609) information representative of configuration parameters of the corresponding module, the configuration parameters having been obtained, in particular, on the basis of the profile; and
- transmitting (611) said request to the addressee first module in order to launch the execution of the workflow.

2. Method according to Claim 1, **characterized in that** the workflow is defined for each chunk furthermore on the basis of commands delivered by a user or automatically by a piece of equipment measuring the performance of the audiovisual distribution system.

3. Method according to Claim 1 or 2, **characterized in that** each module to which said request is addressed deletes (703) its identifier from said request and retransmits the request to a new addressee module of said flow corresponding to the identifier appearing first in the request thus modified if, following said deletion, at least one identifier remains in said request, each module processing data corresponding to the segment of the content to be processed by the workflow as soon as these data are made available by the source or by a preceding module of the workflow.

4. Method according to Claim 1, 2 or 3, **characterized in that** the first module to which the request is addressed is the first module of the workflow in the order of application of the processing operations of the workflow, each module retransmitting the request to the following module in the workflow, said request containing the data to be processed by the following module in the workflow.

5. Method according to Claim 1, 2, 3 or 4, **characterized in that** the first module to which the request is addressed is the last module of the workflow in the order of application of the processing operations of the workflow, each module retransmitting the request to the preceding module in the workflow, each response to a request received by a module containing the data to be processed by said module delivered by the preceding module in the workflow.

6. Method according to Claim 5, **characterized in that**, prior to the transmission of the request to the preceding module in the workflow, the current module checks whether it possesses the data that it must process or the data that it must transmit to the following module in the workflow or to the terminal, possession of said data by the current module causing the transmission of the request to be cancelled.

7. Method according to any one of the preceding claims, **characterized in that**, on reception of a request, each module checks whether an identifier regarding it appears first in said request before any other processing operation and launches an error procedure in case of absence of the identifier.

8. Method according to any one of Claims 3 to 8, **characterized in that**, on reception of a request, each module retrieves information representative of configuration parameters regarding it from the request.

9. Method according to any one of the preceding claims, **characterized in that**, when the procedure for launching the workflow is executed by an intermediate device, the intermediate device receives a first request according to a protocol for delivering audiovisual contents and executes the procedure for launching the workflow on the basis of information representative of the segment of content and information representative of the profile contained in the first request.

10. Method according to any one of the preceding claims, **characterized in that**, when the first module to which the request is addressed is the last module of the workflow in the order of application of the processing operations of the workflow, each request is a request according to the GET method of the HTTP or HTTPS protocol, and when the first module to which the request is addressed is the first module of the workflow in the order of application of the processing operations of the workflow, each request is a request according to the POST method of the HTTP or HTTPS protocol.

11. Device in a system for distributing an audiovisual content stored or produced live by a source to a display terminal, said content being received by said terminal in the form of a succession of consecutive files, called chunks, each chunk being distributed to the terminal following a transmission of a request by said terminal and being obtained via an application of a workflow to a segment of said content, **characterized in that** the device comprises means for executing a procedure for launching the workflow comprising for each chunk:
- obtaining a list of at least one processing operation representative of the workflow to be applied to a segment of the content to obtain said chunk, the workflow having been defined on the basis of a profile selected from a manifest comprising a set of profiles, in particular depending on transmission and processing constraints obtained by said device;
- scanning the list and choosing, for each processing operation, a module from a set of modules able to execute said processing operation and adding an identifier composed of an address and of a port number of the chosen module to a request, the identifier appearing first in the request corresponding to a first module to which said request is addressed;
- adding to the request, for each processing operation, information representative of the segment of content and information representative of configuration parameters of the corresponding module, the configuration parameters having been obtained, in particular, on the basis of the profile; and
- transmitting said request to the addressee first module in order to launch the execution of the workflow.

12. System for distributing an audiovisual content stored or produced live by a source to a display terminal, said content being received by said terminal in the form of a succession of consecutive files, called chunks, each chunk being distributed to the terminal following a transmission of a request by said terminal and being obtained via an application of a workflow comprising at least one processing operation to a segment of said content, **characterized in that** the system comprises a device according to Claim 11 and **in that** the system comprises, for each processing operation of the workflow, a set of modules able to execute said processing operation chooseable by said unit, each module comprising: means for receiving a request transmitted by said terminal or another module of the workflow; means for deleting its identifier from said request; means for retransmitting said request to another module of said flow corresponding to the identifier appearing first in the request if, following said deletion, at least one identifier remains in said request; and, means for processing data corresponding to the segment of the content to be processed by the workflow as soon as these data are made available by the source or by a preceding module of the workflow.

13. Computer program product, **characterized in that** it comprises instructions for implementing, with a device, the method according to Claim 1 via a processor of the device.

14. Storing means, **characterized in that** they store a computer program comprising instructions for implementing, with a device, the method according to Claim 1 when said program is executed by a processor of said device.
